# FASCICULE DE BREVET EUROPEEN

(11) **EP 1 655 190 B1**
(45) Date de publication et mention de la délivrance du brevet: **29.04.2009**
(21) Numéro de dépôt: 05292340.6
(22) Date de dépôt: 04.11.2005
(51) Int. Cl.: B60T 7/10, B60T 11/04, B60T 13/74

(54) **Commande à retour d'effort de frein secondaire électrique de véhicule automobile**
Elektrische Fahrzeugfeststellbremsbetätigungshebel mit Kraftrückkopplungsfunktion
Vehicle parking brake actuator with electric force feedback

(30) Priorité: 08.11.2004 FR 0411867
(43) Date de publication de la demande: 10.05.2006
(73) Titulaire: PEUGEOT CITROËN AUTOMOBILES S.A., 78140 Vélizy Villacoublay (FR)
(72) Inventeur: Bailleux, Francois, 91400 Val Dalbian (FR)

(56) Documents cités:
- WO-A-20/04020265
- WO-A-20/04110835
- DE-A1- 10 102 685

## Description

L'invention concerne un frein secondaire électrique de véhicule automobile, comprenant un actionneur électrique incluant une partie mobile que cet actionneur déplace selon une direction dite de serrage lorsqu'il est sollicité pour serrer le frein, une poignée pouvant être déplacée par un utilisateur pour serrer le frein, et un interrupteur de serrage incluant un organe fixe de serrage et un organe mobile qui ferme l'interrupteur lorsqu'il est en appui sur l'organe fixe, l'actionneur étant sollicité lorsque l'interrupteur de serrage est fermé.

De façon générale, un frein secondaire est un dispositif de commande parallèle à une commande hydraulique de frein principal, et comprend notamment des câbles transmettant un effort de serrage vers des récepteurs de freins intégrant une commande mécanique parallèle à la commande hydraulique.

Le document DE 10102685 décrit un actionneur de frein conventionel, sans poignée.

Les freins secondaires classiques, dits "frein à main" comprennent une poignée, solidaire en rotation d'une poulie, en association avec un câble de frein qui s'enroule sur cette poulie. Le contrôle du dosage de l'effort de freinage est réalisé par l'utilisateur qui perçoit directement l'effort qu'il applique au câble de frein lorsqu'il tire sur la poignée.

Un dispositif à cliquet réalise le blocage en position serrée de l'ensemble constitué par la poignée et la poulie. Ce dispositif comprend un cliquet escamotable, solidaire de la poulie, qui est apte à dépasser de celle-ci pour la bloquer en s'engageant dans une denture correspondante solidaire d'une partie fixe du véhicule.

Le cliquet qui est maintenu en position sortie par un ressort peut être escamoté par l'utilisateur au moyen d'un bouton de déblocage qui agit à l'encontre du ressort.

L'évolution actuelle conduit à des freins secondaires assistés électriquement, c'est-à-dire dans lesquels l'action de l'utilisateur sur la poignée sollicite un actionneur électrique qui génère l'effort appliqué aux câbles de freins. L'utilisateur n'a ainsi pas à générer lui-même l'effort de serrage, comme dans les freins à main.

Les freins secondaires électriques actuels sont commandés au moyen d'un interrupteur électrique du type bouton poussoir, que l'utilisateur enfonce pour activer le frein secondaire. Une carte électronique située entre la poignée et l'actionneur électrique pilote cet actionneur pour qu'il applique aux câbles de freins un effort ayant une intensité adaptée à la situation dans laquelle se trouve le véhicule.

La carte électronique inclut un calculateur qui prend en compte différents paramètres comme par exemple des informations issues d'un capteur de pente, pour que l'effort de freinage soit dosé notamment en fonction de la pente.

Cette carte est relativement évoluée, car elle doit aussi détecter et identifier les situations critiques afin de doser en conséquence l'effort de freinage. De telles situations critiques sont par exemple un démarrage en côte ou un freinage avec le frein secondaire alors que le véhicule roule.

Cependant, le calculateur ne connaît pas nécessairement tous les paramètres permettant d'identifier avec précision les différentes situations critiques pouvant se présenter. Par conséquent, l'effort de freinage appliqué par l'actionneur n'est pas toujours dosé de manière appropriée.

Le but de l'invention est de proposer une commande de frein secondaire électrique permettant un dosage approprié de l'effort de freinage.

A cet effet, l'invention a pour objet un frein secondaire électrique de véhicule automobile, comprenant un actionneur électrique incluant une partie mobile que cet actionneur déplace selon une direction dite de serrage lorsqu'il est sollicité pour serrer le frein, une poignée pouvant être déplacée par un utilisateur pour serrer le frein, et un interrupteur de serrage incluant un organe fixe de serrage et un organe mobile qui ferme l'interrupteur lorsqu'il est en appui sur l'organe fixe, l'actionneur étant sollicité lorsque l'interrupteur de serrage est fermé, caractérisé en ce que la poignée est liée en mouvement à une partie mobile de l'actionneur par l'intermédiaire d'un élément élastique s'étendant entre deux extrémités, et en ce que l'organe mobile est fixé à cet élément élastique dans une région située entre ses deux extrémités.

Selon une caractéristique de l'invention, l'élément élastique est formé par un ressort hélicoïdal, et dans lequel l'organe mobile est fixé à une région centrale de ce ressort hélicoïdal. Mais cet l'élément élastique peut aussi comprendre deux ressorts reliés l'un à l'autre par un élément intermédiaire tel qu'un câble, l'organe mobile étant alors solidaire de cet élément intermédiaire.

Selon une autre caractéristique de l'invention, la partie mobile peut être déplacée par l'actionneur selon une autre direction, dite direction de desserrage lorsque cet actionneur est sollicité pour desserrer le frein, la poignée peut être déplacée pour desserrer le frein, et l'interrupteur comprend un autre organe fixe, dit organe fixe de desserrage, disposé de façon opposée à l'organe fixe de serrage par rapport à l'organe mobile. L'actionneur peut ainsi assurer à la fois le serrage et le desserrage du frein de façon assistée.

Selon une autre caractéristique de l'invention, la poignée comprend un dispositif à cliquet et crémaillère permettant d'immobiliser cette poignée dans une position de serrage parmi plusieurs positions de serrage possibles. L'effort de serrage souhaité peut ainsi être ajusté par l'utilisateur de la même manière qu'avec un frein à main classique. Il est ainsi possible d'utiliser une poignée de type classique, de sorte que l'utilisation est la même que dans le cas d'un frein à main classique.

Selon une autre caractéristique de l'invention, l'actionneur comprend un boîtier dans lequel sont montés un moteur et une vis sans fin qui a une extrémité liée en rotation à ce moteur par une liaison glissière de sorte que cette vis sans fin peut se déplacer longitudinalement par rapport au boîtier tout en étant entraînée en rotation par le moteur, cette vis sans fin a son autre extrémité solidaire d'une buttée à billes qui est appui sur une partie fixe par l'intermédiaire d'un ressort de serrage, un curseur est lié en mouvement à la vis sans fin par une liaison hélicoïdale, et la partie mobile de l'actionneur est constituée par la butée à bille. La commande est ainsi asservie sur l'effort de serrage qui est appliqué, de manière à ne pas être influencée par l'usure des freins ou les variations de leurs dimensions sous l'effet des variations thermiques.

Selon une autre caractéristique de l'invention, l'actionneur est équipé de deux interrupteurs de fin de course aptes à couper l'alimentation électrique du moteur lorsque le curseur est en fin de course de serrage ou en fin de course de desserrage. Les interrupteurs de fin de course ont une fonction de sécurité : ils ne sont pas sollicités en fonctionnement normal et servent en cas d'incident de fonctionnement à stopper la rotation du moteur.

Selon une autre caractéristique de l'invention, l'actionneur est monté dans un boîtier, et dans lequel l'élément élastique ainsi que les organes fixes et mobile et les interrupteurs de fin de course sont montés dans ce boîtier. Le fait de réunir l'ensemble des fonctions électriques dans un même boîtier réduit les coûts de fabrication et d'intégration, et facilite l'homologation car il n'y a pas de fils de commande à l'extérieur du boîtier. Il n'est donc pas nécessaire de doubler de tels fils de commande, comme c'est par exemple le cas lorsque le frein est commandé électriquement depuis une planche de bord.

L'invention sera maintenant décrite plus en détail, et en référence aux dessins annexés qui en illustrent des modes de réalisation à titre d'exemple non limitatif.
- La figure 1 est une représentation schématique du frein selon l'invention lorsque la poignée est en position de serrage ;
- La figure 2 est un diagramme illustrant le fonctionnement du frein secondaire selon l'invention ;
- La figure 3 montre un circuit électrique pour frein secondaire électrique ;
- La figure 4 est une première vue détaillée de l'actionneur selon l'invention ;
- La figure 5 est une seconde vue détaillée de l'actionneur selon l'invention ;

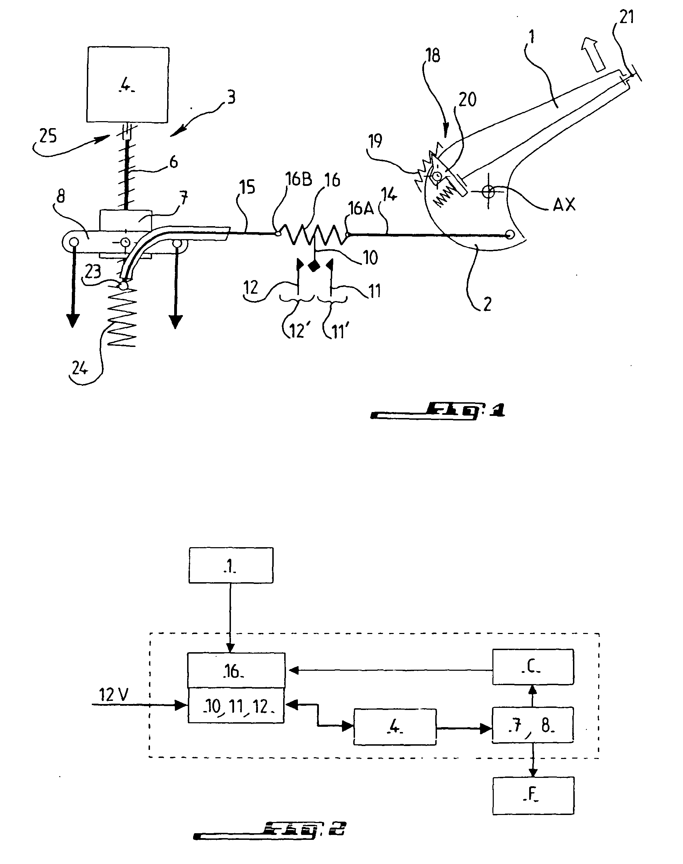

Le frein secondaire électrique qui est représenté schématiquement sur la figure 1 comprend une poignée qui est solidaire d'une poulie 2, l'ensemble formé par la poignée et la poulie étant apte à pivoter autour d'un axe AX.

Ce frein électrique comprend également un actionneur électrique 3 comprenant un moteur 4 apte à déplacer une partie mobile selon une direction de serrage et selon une direction de desserrage. Il inclut un boîtier non représenté, dans lequel est monté le moteur électrique 4 qui entraîne en rotation une vis sans fin 6 sur laquelle est monté un curseur 7 qui est lié en mouvement avec la vis sans fin 6 par une liaison hélicoïdale.

Lorsque la vis sans fin 6 est entraînée en rotation par le moteur 4, le curseur 7 se déplace longitudinalement par rapport à cette vis sans fin pour appliquer un effort de freinage à des câbles de frein.

Dans le cas de deux câbles, cet effort est transmis par un palonnier 8 qui équilibre les efforts entre les deux câbles. Ces deux câbles de freins correspondent par exemple respectivement aux freins arrières droite et gauche du véhicule. La partie mobile qui est apte à appliquer l'effort de traction peut être directement le curseur 7, mais elle peut aussi être constituée par une autre partie de l'actionneur 3, ce qui serra détaillé plus bas.

L'actionneur est prévu pour déplacer la partie mobile selon une direction de serrage et selon une direction de desserrage, en fonction d'un ordre de commande qui lui est transmis. Dans l'exemple de la figure, la direction de serrage correspond à un déplacement dans lequel le curseur 7 se rapproche du moteur 4, et la direction de desserrage est une direction dans laquelle ce curseur s'éloigne du moteur 4.

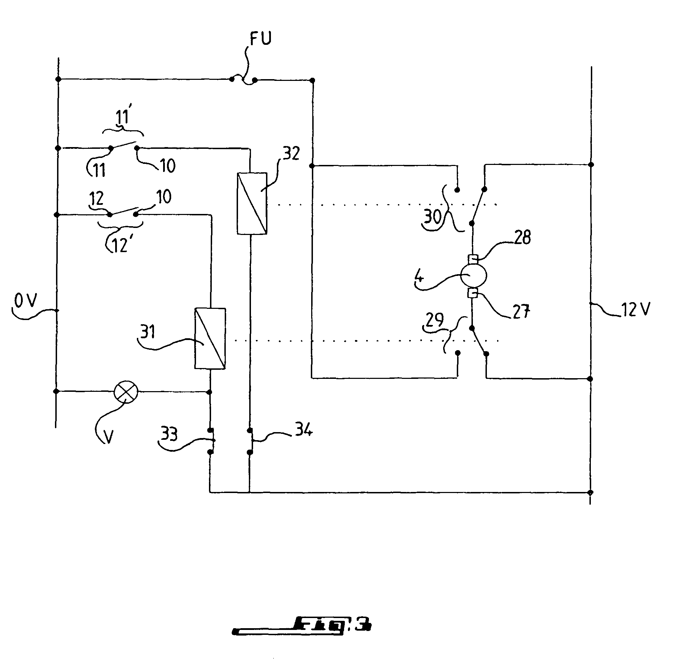

Ce frein électrique comprend un organe mobile 10 apte à être en appui soit sur un organe fixe 11 dit de serrage, soit sur un organe fixe 12 dit de desserrage, aptes à commander le moteur 4 pour qu'il tourne soit dans un sens de serrage soit dans un sens de desserrage. Dans l'exemple des figures 1 et 3, l'organe mobile est un contact électrique mobile, et les organes fixes sont des contacts fixes.

L'organe mobile 10 et l'organe fixe 11 constituent un interrupteur de serrage 11' apte à solliciter l'actionneur 3 pour qu'il serre le frein lorsque cet interrupteur est électriquement fermé. De manière analogue l'organe mobile 10 constitue avec l'organe fixe de desserrage un interrupteur 12' de desserrage du frein, apte à solliciter l'actionneur 3 pour qu'il desserre le frein lorsque cet interrupteur de desserrage est électriquement fermé.

L'idée à la base de l'invention est que l'effort appliqué aux câbles de freins est directement contrôlé par l'utilisateur. Ceci est réalisé au moyen d'une commande qui inclut un dispositif à retour d'effort, c'est à dire un dispositif dans lequel l'actionneur 3 applique aux freins un effort qui est proportionnel à l'effort qu'exerce l'utilisateur sur la poignée.

La sûreté de fonctionnement, en particulier dans les situations critiques est ainsi nettement améliorée puisque c'est l'utilisateur qui dose directement l'effort à appliquer en fonction de la situation qu'il rencontre. D'autre part, la commande étant sensible au retour d'effort, son encombrement peut rester très faible en comparaison avec les poignées du type frein à main.

Les modes de réalisation décrits ci-après, incluent un ressort de retour d'effort du type hélicoïdal. Mais l'invention peut aussi bien être mise en oeuvre en utilisant un élément élastique à base de mousse offrant par exemple une élasticité non linéaire.

Selon l'invention, la poignée 1 est liée en mouvement à la partie mobile de l'actionneur par l'intermédiaire de deux câbles 14 et 15 reliés l'un à l'autre par au moins un ressort 16, et ce ressort 16 porte dans sa partie centrale l'organe mobile 10.

Plus particulièrement, le premier câble 14 a une extrémité reliée à la poulie 2 ou à la poignée 1, et son autre extrémité solidaire d'une première extrémité 16A du ressort 16. Le second câble 15 a une extrémité solidaire de la partie mobile de l'actionneur 3, et son autre extrémité solidaire d'une seconde extrémité 16B du ressort 16. Chaque câble 14, 15 est par exemple positionné dans une gaine.

Lorsque l'utilisateur tire la poignée 1, le ressort s'allonge 16, sa seconde extrémité 16B restant immobile. Cet allongement provoque le déplacement de l'organe mobile 10, jusqu'à l'organe fixe de serrage 11, ce qui a pour effet d'actionner le moteur 4 dans un sens de serrage. Le déplacement de la partie mobile de l'actionneur allonge alors le ressort 16, la première extrémité 16A de ce ressort 16 restant alors immobile, ce qui a pour effet d'éloigner l'organe mobile 10 de l'organe fixe de serrage 11, jusqu'à obtenir l'ouverture de l'interrupteur de serrage 11'. Dans cette situation, la partie mobile de l'actionneur s'immobilise, le serrage étant réalisé.

Lorsque l'utilisateur pousse la poignée 1 pour desserrer le frein, le ressort 16 se rétrécit, sa seconde extrémité 16B restant alors immobile, ce qui a pour effet de rapprocher l'organe mobile 10 de l'organe fixe de desserrage 12, jusqu'à obtenir la fermeture de l'interrupteur de desserrage 12'. L'actionneur 3 déplace alors la partie mobile dans la direction de desserrage ce qui a pour effet de rétrécir le ressort 16 alors que sa première extrémité 16A reste immobile. L'organe mobile 10 s'éloigne alors de l'organe fixe 12 de desserrage, jusqu'à ouvrir l'interrupteur de desserrage 12' pour que la partie mobile s'immobilise, le desserrage du frein ayant été réalisé.

La poignée 1 peut être une poignée de type classique, incluant un dispositif de blocage 18 comprenant une crémaillère 19 et un cliquet 20 pouvant être dégagé par un bouton poussoir 21 situé en bout de poignée.

Comme dans le cas des poignées classiques, cette poignée peut ainsi être immobilisée dans une position de serrage parmi plusieurs positions de serrage possibles, de manière à définir l'intensité de serrage souhaitée.

En effet, plus l'utilisateur tire la poignée 1 vers le haut, plus le ressort 16 s'allonge d'une valeur importante, ce qui nécessite par conséquent un déplacement d'autant plus important de la partie mobile pour que l'organe mobile 10 se décolle de l'organe fixe de serrage 11.

Cette poignée a avantageusement de plus faibles dimensions que les poignées classiques, car les efforts appliqués par l'utilisateur sont bien inférieurs à ceux appliqués sur les poignées classiques, non assistées. La poignée peut par exemple être prévue pour être manoeuvrable par un doigt et non pas par la main complète.

L'utilisateur peut ainsi enfoncer le bouton poussoir 21, tirer sur la poignée 1 avec une intensité plus ou moins importante qui correspond à l'effort de serrage souhaité, et relâcher le bouton poussoir 21 pour immobiliser la poignée 1 dans la position souhaitée.

L'actionneur peut ainsi agir avec un certain retard : le conducteur applique sa consigne, puis le motoréducteur amène l'effort correspondant en quelques secondes (de l'ordre de 2 secondes). Ceci permet de dimensionner l'actionneur avec un moteur relativement lent, de manière à réduire le coût de fabrication de l'ensemble du dispositif.

Le dispositif de la figure 1 est représenté sous forme de schéma bloc dans la figure 2 pour illustrer les relations fonctionnelles entre les différents éléments du dispositif selon l'invention.

Ainsi, lorsque la poignée 1 est déplacée par l'utilisateur, elle agit sur le ressort 16 pour fermer l'interrupteur de serrage ou de desserrage, ce qui sollicite le moteur 4 pour le faire tourner dans un sens de serrage ou de desserrage de manière à générer ou relâcher un effort de freinage F dans les freins du véhicule.

Dans le mode de réalisation ci-dessus, la partie mobile de l'actionneur est constituée par le curseur de sorte que l'effort de retour est proportionnel à la position du curseur le long de la vis sans fin. Mais cette position peut varier pour un même effort de serrage par exemple du fait de l'usure des garnitures de frein, ou de la dilatation des disques de freins sous l'effet de variations de température.

La mise en oeuvre d'un ressort de serrage, telle que décrite ci-dessous, permet de s'affranchir de ces variations, ce ressort de serrage constituant une réserve élastique dans le système. Ce ressort de serrage est repéré par 24 sur la figure 1.

Dans ce cas, la partie mobile de l'actionneur, à laquelle est reliée la poignée, est alors formée par une butée à bille 23 située à l'une des extrémités d'un ressort de serrage 24. Le corps du moteur 4 est monté fixe par rapport au véhicule, mais le moteur 4 a son arbre de sortie qui est lié à la vis sans fin 6 par une liaison glissière 25 grâce à laquelle la vis sans fin est solidaire en rotation de cet arbre de sortie tout en pouvant se déplacer longitudinalement par rapport à celui-ci.

L'autre extrémité de la vis sans fin 6 est en appui contre le ressort de serrage 24 par l'intermédiaire de la butée à billes 23, de telle sorte que la vis sans fin 6 peut tourner par rapport au ressort de serrage tout en ayant son extrémité en appui contre celui-ci.

Le palonnier 8 auquel sont liés les câbles de serrage est fixé au curseur 7 par rapport auquel il peut pivoter pour équilibrer les efforts dans les câbles de serrage.

Lorsque l'actionneur 3 est sollicité pour serrer le frein secondaire, la vis sans fin 6 est entraînée en rotation et avance par rapport au curseur 7, grâce à la liaison glissière, de telle sorte qu'elle comprime le ressort de serrage 24 pour exercer un effort de freinage sur les câbles de freins.

Le second câble 15 a une extrémité rigidement fixée à une partie non rotative de la butée à bille 23, dans une direction telle que la compression du ressort de serrage 24 tire sur ce second câble 15, tendant à allonger le ressort de retour d'effort 16.

Lorsque l'actionneur 3 est sollicité pour serrer le frein, c'est principalement la vis sans fin 6 et la butée à billes 23 qui se déplace en comprimant le ressort de serrage 24 pour exercer sur les câbles de freins un effort par l'intermédiaire du curseur 7 et du palonnier 8.

Par conséquent, le retour d'effort est ici proportionnel à la compression du ressort de serrage 24, c'est-à-dire qu'il est proportionnel à l'effort que l'actionneur 3 applique réellement aux câbles de freins, et non pas à un déplacement des câbles de freinage.

La mise en oeuvre du ressort de serrage 24 dans l'actionneur permet aussi d'obtenir un déplacement plus important du curseur 7 par rapport à la vis sans fin 6 pendant le serrage du frein, de telle sorte que le moteur 4 doit produire l'ensemble de l'effort de serrage sur une plage de rotation plus étendue.

Un exemple de circuit électrique pouvant être mis en oeuvre pour piloter l'actionneur est représenté sur la figure 3. Ce circuit est situé entre une masse 0V et une alimentation positive référencée par 12V sur la figure. Dans ce circuit, le moteur électrique 4 est représenté avec deux bornes 27 et 28 qui sont reliées respectivement à deux interrupteurs 29 et 30.

Ces deux interrupteurs 29 et 30 sont actionnés respectivement par les interrupteurs de desserrage et de serrage 11' et 12' mentionnés plus haut, par l'intermédiaire, respectivement de deux relais 31 et 32. Par défaut, c'est à dire lorsque l'organe mobile 10 n'est en contact ni avec l'organe fixe de serrage 11 ni avec l'organe fixe de desserrage 12, les interrupteurs 29 et 30 sont tous deux reliés à l'alimentation 12V de sorte que le moteur 4 n'est pas alimenté électriquement.

Lorsque l'organe mobile 10 est en appui contre l'organe fixe 11 c'est-à-dire lorsque l'interrupteur 11' est fermé, le relais 32 actionne l'interrupteur 30 pour qu'il se mette en contact avec la masse 0V, de sorte que les deux bornes 27 et 28 du moteur sont alimentées respectivement par la masse 0V et par l'alimentation 12V, ce qui fait tourner le moteur dans un premier sens de rotation.

De manière analogue, lorsque l'interrupteur 12' est fermé, le relais 31 actionne l'interrupteur 29, et les bornes du moteur sont alimentées de façon inverse, de sorte que le moteur 4 tourne dans un sens opposé au sens ci-dessus.

Ce circuit électrique comprend aussi un fusible FU placé entre les interrupteurs 29 et 30 et la masse 0V, ce fusible étant destiné à intervenir par exemple en cas de court-circuit dans le moteur 4.

Le circuit comprend encore deux interrupteurs dits de fin de course 33 et 34 qui sont actionnés mécaniquement par le curseur 7 pour s'ouvrir lorsque celui-ci atteint sa course maximale quand il se rapproche du moteur 4 ou sa course maximale quand il s'éloigne de ce moteur. Ces interrupteurs de fin de course qui sont reliés respectivement aux relais 31 et 32 s'ouvrent lorsque la fin de course est atteinte afin de couper l'alimentation du moteur 4 pour éviter qu'il ne se détériore.

Le circuit de la figure 3 est également équipé d'un voyant repéré par V, qui est relié à l'interrupteur de fin de course de desserrage de manière à s'illuminer lorsque cet interrupteur est fermé, c'est à dire lorsque les freins ne sont pas totalement desserrés.

L'interrupteur de fin de course de desserrage 34 peut également être constitué par un capteur d'effort intégré au ressort de serrage 24, ce qui est repéré par C dans la figure 2.

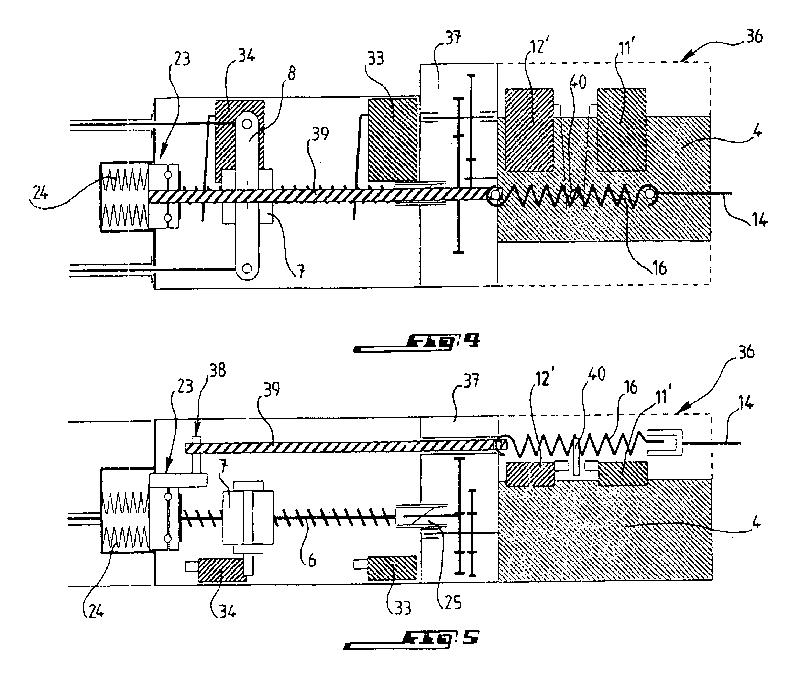

Avantageusement, l'ensemble des fonctions électriques apparaissant dans le circuit de la figure 3 est intégré à l'actionneur, les différents interrupteurs étant notamment montés dans un boîtier de cet actionneur, par exemple selon la disposition présentée sur les figures 4 et 5.

Afin d'éviter qu'une rupture du câble 14 ou du câble 15 ne provoque le desserrage brutal et imprévu du frein à main, il convient de prévoir un système électrique additionnel qui interdit le desserrage du frein lorsque le contact du véhicule est coupé.

Les figures 4 et 5 montrent de façon plus détaillée une architecture d'un actionneur électrique selon l'invention qui comprend un boîtier 36 dans lequel sont regroupés la majorité des éléments constitutifs de la commande de frein secondaire selon l'invention.

Ce boîtier comprend le moteur 4 qui est associé à un réducteur mécanique 37 comprenant un arbre de sortie relié à la vis sans fin 6 par la liaison glissière 25. La vis sans fin 6 a son autre extrémité en appui sur un ressort de serrage 24 qui est ici formé par plusieurs rondelles "Belleville", par l'intermédiaire de la butée à bille 23, ce ressort de serrage est placé du côté intérieur du boîtier 36. Dans cet agencement, l'ensemble du boîtier 36 est monté fixe par rapport au véhicule, et la partie mobile de l'actionneur est constituée par la butée à bille 23.

Le ressort de retour d'effort 16 est monté à l'intérieur du boîtier 36 en ayant une extrémité fixée à une extrémité d'une tige de retour d'effort 39 qui est apte à se déplacer longitudinalement par rapport au boîtier. L'autre extrémité de la tige de retour d'effort 39 est fixée à une attache 38 qui est solidaire de la partie de la butée à bille 23 en appui contre le ressort de serrage 24. L'autre extrémité du ressort de retour d'effort 16 est fixée à l'une des extrémités du câble de retour d'effort 14 qui traverse la paroi du boîtier 36, et qui rejoint la poulie 2.

Dans cet exemple, la chaîne de transmission de mouvement est donc formée principalement par le ressort de retour d'effort 16, par la tige de retour d'effort 39 qui sont situés à l'intérieur du boîtier 36, et par le câble de retour d'effort 14 qui sort de ce boîtier 36.

Comme représenté sur les figures 4 et 5, le boîtier 36 comprend également l'interrupteur de fin de course de serrage 33 et l'interrupteur de fin de course de desserrage 34 qui sont tous deux actionnés par le curseur 7.

Mais les interrupteurs 11' et 12', destinés à commander le desserrage et le serrage sont également situés à l'intérieur du boîtier 36, en étant actionnés par l'intermédiaire d'un ergot 40 qui est solidaire du ressort de retour d'effort 16.

Lorsque l'utilisateur tire sur la poignée 1 pour commander le serrage du frein, le câble de retour d'effort 14 tire le ressort de retour d'effort 16 vers la droite sur ces figures, ce qui a pour effet d'activer l'interrupteur 11' pour déclencher le serrage du frein. De manière analogue, lorsque l'utilisateur enfonce la poignée 1, la tige de retour d'effort 39 est déplacée vers la gauche sur ces figures, de sorte que l'ergot 40 active alors l'interrupteur 12' qui commande le desserrage du frein.

L'actionneur représenté sur les figures 4 et 5 peut ainsi être monté directement sur le plancher du véhicule en lieu et place de la poignée de frein classique, ce qui permet notamment d'éviter de rendre cet actionneur étanche.

L'invention qui a été décrite ci-dessus dans le cadre d'un frein secondaire électrique trouve des applications dans d'autres domaines nécessitant de façon générale la mise en oeuvre d'une commande du type à retour d'effort.

## Revendications

1. Frein secondaire électrique de véhicule automobile, comprenant un actionneur électrique (3) incluant une partie mobile (23) que cet actionneur déplace selon une direction dite de serrage lorsqu'il est sollicité pour serrer le frein, une poignée (1) pouvant être déplacée par un utilisateur pour serrer le frein, et un interrupteur de serrage (11') incluant un organe fixe de serrage (11) et un organe mobile (10) qui ferme l'interrupteur lorsqu'il est en appui sur l'organe fixe, l'actionneur (3) étant sollicité lorsque l'interrupteur de serrage (11) est fermé, **caractérisé en ce que** la poignée (1) est liée en mouvement à une partie mobile (23) de l'actionneur par l'intermédiaire d'un élément élastique (16) s'étendant entre deux extrémités (16A, 16B), et **en ce que** l'organe mobile (10) est fixé à cet élément élastique (16) dans une région située entre ses deux extrémités (16A, 16B).

2. Frein selon la revendication 1, dans lequel l'élément élastique est formé par un ressort hélicoïdal (16), et dans lequel l'organe mobile (10) est fixé à une région centrale de ce ressort hélicoïdal (16).

3. Frein selon la revendication 1, dans lequel l'élément élastique comprend deux ressorts reliés l'un à l'autre par un élément intermédiaire tel qu'un câble, et dans lequel l'organe mobile (10) est solidaire de cet élément intermédiaire.

4. Frein selon l'une des revendications précédentes, dans lequel la partie mobile (23) peut être déplacée par l'actionneur (3) selon une autre direction, dite direction de desserrage lorsque cet actionneur (3) est sollicité pour desserrer le frein, dans lequel la poignée (1) peut être déplacée pour desserrer le frein, et dans lequel l'interrupteur comprend un autre organe fixe, dit organe fixe de desserrage (12), disposé de façon opposée à l'organe fixe de serrage (11) par rapport à l'organe mobile (10).

5. Frein selon l'une des revendications précédentes, dans lequel la poignée (1) comprend un dispositif à cliquet et crémaillère permettant d'immobiliser cette poignée (1) dans une position de serrage parmi plusieurs positions de serrage possibles.

6. Frein selon l'une des revendications précédentes, dans lequel l'actionneur (3) comprend un boîtier (36) dans lequel sont montés un moteur (4) et une vis sans fin (6) qui a une extrémité liée en rotation à ce moteur (4), par une liaison glissière (25) de sorte que cette vis sans fin (6) peut se déplacer longitudinalement par rapport au boîtier (36) tout en étant entraînée en rotation par le moteur (4), cette vis sans fin (6) ayant son autre extrémité solidaire d'une butée à billes (23) qui est appui sur une partie fixe par l'intermédiaire d'un ressort de serrage (24), un curseur (7) lié en mouvement à la vis sans fin (6) par une liaison hélicoïdale, et dans lequel la partie mobile de l'actionneur (3) est constituée par la butée à bille (23).

7. Frein selon la revendication 4, dans lequel l'actionneur (3) est équipé de deux interrupteurs de fin de course (33, 34) aptes à couper l'alimentation électrique du moteur (4) lorsque le curseur (7) est en fin de course de serrage ou en fin de course de desserrage.

8. Frein selon la revendication 7, dans lequel l'actionneur (3) est monté dans un boîtier (36), et dans lequel l'élément élastique (16) ainsi que les organes fixes et mobile (10, 11, 12) et les interrupteurs de fin de course (33, 34) sont montés dans ce boîtier (36).

9. Frein selon la revendication 6, dans lequel le ressort de serrage (24) constitue une réserve élastique d'effort de serrage.

## Claims

1. Electric secondary brake of a motor vehicle, comprising an electric actuator (3) including a moving part (23) that this actuator displaces in a "clamping" direction when it is stressed to clamp the brake, a handle (1) that can be displaced by a user to clamp the brake, and a clamping switch (11') including a fixed clamping member (11) and a moving member (10) that closes the switch when it is bearing on the fixed member, the actuator (3) being stressed when the clamping switch (11) is closed, **characterized in that** the handle (1) is linked movement-wise to a moving part (23) of the actuator through the intermediary of an elastic element (16) extending between two ends (16A, 16B), and **in that** the moving member (10) is fixed to this elastic element (16) in the region situated between its two ends (16A, 16B).

2. Brake according to Claim 1, in which the elastic element is formed by a helical spring (16), and in which the moving member (10) is fixed to a central region of this helical spring (16).

3. Brake according to Claim 1, in which the elastic element comprises two springs linked to each other by an intermediate element such as a cable, and in which the moving member (10) is joined to this intermediate element.

4. Brake according to one of the preceding claims, in which the moving part (23) can be displaced by the actuator (3) in another direction, called unclamping direction, when this actuator (3) is stressed to unclamp the brake, in which the handle (1) can be displaced to unclamp the brake, and in which the switch comprises another fixed member, called unclamping fixed member (12), arranged opposite the clamping fixed member (11) relative to the moving member (10).

5. Brake according to one of the preceding claims, in which the handle (1) comprises a ratchet and rack device making it possible to immobilize this handle (1) in one clamping position out of several possible clamping positions.

6. Brake according to one of the preceding claims, in which the actuator (3) comprises a casing (36) in which are mounted a motor (4) and a worm screw (6) which has one end linked rotation-wise to this motor (4), by a slide link (25) so that this worm screw (6) can be displaced longitudinally relative to the casing (36) while being driven rotation-wise by the motor (4), this worm screw (6) having its other end joined to a ball thrust bearing (23) which bears on a fixed part through the intermediary of a clamping spring (24), a cursor (7) linked movement-wise to the worm screw (6) by a helical link, and in which the moving part of the actuator (3) is made up of the ball thrust bearing (23).

7. Brake according to Claim 4, in which the actuator (3) is equipped with two limit switches (33, 34) able to cut off the electrical power supply to the motor (4) when the cursor (7) is at the clamping limit or at the unclamping limit.

8. Brake according to Claim 7, in which the actuator (3) is mounted in a casing (36), and in which the elastic element (16) and the fixed and moving members (10, 11, 12) and the limit switches (33, 34) are mounted in this casing (36).

9. Brake according to Claim 6, in which the clamping spring (24) constitutes an elastic reserve of clamping force.

## Patentansprüche

1. Elektrische Hilfsbremse für Kraftfahrzeug, die einen elektrischen Stellantrieb (3) aufweist, der einen beweglichen Teil (23) umfasst, den dieser Stellantrieb entlang einer so genannten Anziehrichtung bewegt, wenn er beansprucht wird, um die Bremse anzuziehen, einen Griff (1), der von einem Benutzer bewegt werden kann, um die Bremse anzuziehen, und einem Anziehschalter (11'), der ein stationäres Anziehorgan (11) und ein bewegliches Organ (10) aufweist, das den Schalter schließt, wenn er auf dem stationären Organ aufliegt, wobei der Stellantrieb (3) beansprucht wird, wenn der Anziehschalter (11) in Bewegung mit einem beweglichen Teil (23) des Stellantriebs über ein elastisches Element (16), das sich zwischen zwei Enden (16A, 16B) erstreckt, verbunden ist, und dass das bewegliche Organ (10) an diesem elastischen Element (16) in einem Bereich, der zwischen seinen zwei Enden (16A, 16B) liegt, befestigt ist.

2. Bremse nach Anspruch 1, bei der das elastische Element aus einer Spiralfeder (16) gebildet ist, und bei der das bewegliche Organ (10) an einem zentralen Bereich dieser Spiralfeder (16) befestigt ist.

3. Bremse nach Anspruch 1, bei der das elastische Element zwei Federn aufweist, die miteinander durch ein Zwischenelement, wie zum Beispiel ein Kabel, verbunden sind, und bei der das bewegliche Organ (10) fest mit diesem Zwischenelement verbunden ist.

4. Bremse nach einem der vorhergehenden Ansprüche, bei der der bewegliche Teil (23) von dem Stellantrieb (3) entlang einer anderen Richtung, Löserichtung genannt, bewegt werden kann, wenn dieser Stellantrieb (3) beansprucht wird, um die Bremse zu lösen, bei der der Griff (1) bewegt werden kann, um die Bremse zu lösen, und bei der der Schalter ein anderes stationäres Organ aufweist, stationäres Löseorgan (12) genannt, das dem stationären Anziehorgan (11) in Bezug auf das bewegliche Organ (10) entgegen gesetzt angeordnet ist.

5. Bremse nach einem der vorhergehenden Ansprüche, bei der der Griff (1) eine Vorrichtung mit Ratsche und Zahnstange aufweist, die es erlaubt, diesen Griff (1) in einer Anziehposition unter mehreren möglichen Anziehpositionen festzustellen.

6. Bremse nach einem der vorhergehenden Ansprüche, bei der der Stellantrieb (3) ein Gehäuse (36) aufweist, in das ein Motor (4) und eine Schnecke (6), von der ein Ende in Drehung mit diesem Motor (4) verbunden ist, durch eine Gleitschiene (25) montiert sind, dass sich diese Schnecke (6) längs in Bezug zu dem Gehäuse (36) bewegen kann, wobei das andere Ende dieser Schnecke (6) fest mit einem Druckkugellager (23) verbunden ist, das auf einem stationären Teil über eine Spannfeder (24), einen Gleitkontakt (7), der in Bewegung mit der Schnecke (6) über eine schraubenförmige Verbindung verbunden ist, aufliegt, und bei der der bewegliche Teil des Stellantriebs (3) aus dem Druckkugellager (23) besteht.

7. Bremse nach Anspruch 4, bei der der Stellantrieb (3) mit zwei Hubendschaltern (33, 34) ausgerüstet ist, die die Stromversorgung des Motors (4) abschalten können, wenn der Gleitkontakt (7) am Anziehhubende oder am Lösehubende ist.

8. Bremse nach Anspruch 7, bei der der Stellantrieb (3) in ein Gehäuse (36) montiert ist, und bei der das elastische Element (16) sowie die stationären und beweglichen Teile (10, 11, 12) sowie die Hubendschalter (33, 34) in dieses Gehäuse (36) montiert sind.

9. Bremse nach Anspruch 6, bei der die Spannfeder (24) eine elastische Anziehkraftreserve bildet.
